# DEMANDE DE BREVET EUROPEEN

(11) **EP 4 645 626 A1**
(43) Date de publication de la demande: **05.11.2025**
(21) Numéro de dépôt: 25173579.1
(22) Date de dépôt: 30.04.2025
(51) Int. Cl.: H02J 3/36, H02J 3/48, H02J 3/50

(54) **PROCÉDÉ DE COMMANDE D'UN SYSTÈME DE DISTRIBUTION ÉLECTRIQUE SÉRIE ET SYSTÈME DE DISTRIBUTION ÉLECTRIQUE SÉRIE ASSOCIÉ**

(30) Priorité: 02.05.2024 FR 2404607
(71) Demandeur: SCHNEIDER ELECTRIC INDUSTRIES SAS, 92500 Rueil-Malmaison (FR)
(72) Inventeur: CISSOKO, Seyba, 38180 SEYSSINS (FR); MEGDICHE, Malik, 38320 EYBENS (FR)
(74) Mandataire: Lavoix

(57) **Abrégé**

La présente invention concerne un procédé de commande d'un système de distribution électrique comprenant un dispositif d'alimentation délivrant une moyenne tension alternative, des charges électriques et un module de conversion par charge électrique. Les bornes d'entrée de tous les modules sont connectées en série entre elles et au dispositif d'alimentation. Chaque module comprend un convertisseur délivrant à sa charge électrique une basse tension continue à partir de la moyenne tension. Le procédé comprend, pour chaque module, régler la puissance active délivrée par le module en fonction de la puissance active de fonctionnement de sa charge électrique et maintenir constante une puissance apparente du module en régulant une amplitude et un déphasage de la tension à ses bornes, sur la base de la puissance active délivrée par le module à sa charge électrique, de la tension et du courant délivrés par le dispositif d'alimentation aux modules et du nombre de modules.

## Description

La présente invention concerne un procédé de commande d'un système de distribution électrique, en particulier d'un centre de traitement de données, et un système de distribution électrique associé.

Un centre de traitement de données (en anglais *data center*), également désigné comme centre de données ou centre informatique, est une installation où sont regroupés plusieurs équipements appartenant à un système d'information, tels que des ordinateurs centraux, des serveurs, des dispositifs de stockage de données, des équipements réseaux et/ou des équipements de télécommunication. Ces équipements forment des charges électriques et sont disposés dans des baies (en anglais *rack*), c'est-à-dire dans des armoires de dimensions normalisées. De manière connue en soi, une baie comprend un ou plusieurs équipements, généralement disposés dans des tiroirs ou des boîtiers de dimensions normalisées.

Les baies d'un centre de traitement de données sont alimentées par un dispositif d'alimentation et les équipements montés dans une baie fonctionnent généralement en basse tension, c'est-à-dire à une tension comprise entre 48 V et 400 V. Les équipements d'un centre de traitement de données sont électriquement connectés en parallèle à la source d'alimentation, qui délivre alors un courant électrique à basse tension à chacune des baies. Compte-tenu de la puissance électrique élevée consommée par un centre de traitement de données, le dispositif d'alimentation est lui-même alimenté par un réseau électrique en moyenne tension, c'est-à-dire à une tension comprise entre 10 kV et 35 kV, de sorte qu'un ou plusieurs transformateurs sont nécessaires pour transformer cette moyenne tension en basse tension alimentant les baies.

L'augmentation de la puissance de calcul des équipements, causée notamment par le développement de l'intelligence artificielle, conduit à une augmentation de la puissance électrique nécessaire pour alimenter ces équipements. Par exemple, une baie peut consommer une puissance électrique pouvant s'élever jusqu'à 100 kW. Ainsi, les transformateurs et les connexions électriques reliant le dispositif d'alimentation aux équipements, le plus souvent réalisées en cuivre, doivent être dimensionnées pour supporter une puissance électrique importante (courant très important en basse tension), ce qui augmente significativement leur coût de fabrication ainsi que leur encombrement.

Autrement dit, l'architecture actuelle des centres de traitement de données n'est pas adaptée à l'augmentation de la puissance de calcul des équipements à cause d'un coût d'installation et d'un encombrement trop élevés.

C'est à cet inconvénient qu'entend remédier l'invention, en proposant un procédé de commande d'un système de distribution électrique, en particulier d'un centre de traitement de données, et en proposant une architecture de système de distribution électrique améliorée correspondante, dont le coût de fabrication et l'encombrement sont réduits.

À cet effet, l'invention a pour objet un procédé de commande d'un système de distribution électrique, le système de distribution électrique comprenant :
- un dispositif d'alimentation, configuré pour délivrer un premier courant, qui est un courant alternatif monophasé, associé à une première tension, qui est une tension alternative monophasée comprise entre 10 kV et 35 kV,
- une pluralité de charges électriques, par exemple un serveur de données,
- une pluralité de modules de conversion, les modules de conversion étant respectivement associés aux charges électriques,
   ∘ chaque module de conversion comprenant des bornes d'entrée et des bornes de sortie,
   ∘ les bornes d'entrée de tous les modules de conversion étant connectées en série entre elles et au dispositif d'alimentation, le premier courant circulant ainsi entre les bornes d'entrée de tous les modules de conversion, la première tension étant ainsi appliquée à l'ensemble des modules de conversion,
   ∘ les bornes de sortie de chaque module de conversion étant connectées à la charge électrique associée au module de conversion,
   ∘ chaque module de conversion comprenant un convertisseur, connecté aux bornes de sortie du module de conversion et configuré pour délivrer à la charge électrique associée une tension continue comprise entre 48 V et 400 V et un courant continu, à partir de la tension alternative aux bornes d'entrée du module de conversion et du courant alternatif circulant entre les bornes d'entrée du module de conversion, délivrant ainsi une puissance active alimentant la charge électrique associée.
Le procédé de commande comprend, pour chaque module de conversion :
- réguler la tension continue délivrée par le module de conversion à la charge électrique associée, pour la maintenir égale à une valeur constante, sur la base d'une valeur de puissance active de fonctionnement, imposée par la charge électrique, et
- maintenir une puissance apparente du module de conversion égale à une valeur cible, pour que les puissances apparentes de tous les modules de conversion soient égales entre elles, en régulant une amplitude de la tension alternative aux bornes d'entrée du module de conversion et un déphasage entre la tension alternative aux bornes d'entrée du module de conversion et le courant alternatif circulant entre les bornes d'entrée du module de conversion, sur la base :

∘ de la puissance active délivrée par le module de conversion à la charge électrique associée,
∘ de la tension alternative et du courant alternatif délivrés par le dispositif d'alimentation à la pluralité de modules de conversion, et
∘ du nombre de modules de conversion.

Grâce à l'invention, tous les modules de conversion sont connectés en série au dispositif d'alimentation qui délivre une moyenne tension, et la conversion moyenne tension - basse tension s'effectue par les modules de conversion pour alimenter les charges électriques, de sorte qu'un réseau intermédiaire de distribution basse tension entre le dispositif d'alimentation et les charges électriques n'est plus nécessaire, simplifiant l'infrastructure électrique en comparaison avec une architecture dans laquelle toutes les charges électriques sont connectées en parallèle à un dispositif d'alimentation basse tension. Le coût en matériau du système de distribution électrique, et plus particulièrement la quantité de cuivre nécessaire à sa réalisation, est ainsi réduit et sa compacité est améliorée.

Cette architecture dans laquelle tous les modules de conversion sont connectés en série au dispositif d'alimentation et alimentés en moyenne tension est rendue possible par le procédé de commande de l'invention, dans lequel chaque module de conversion est commandé pour maintenir une puissance apparente égale à une valeur cible, pour que les puissances apparentes de tous les modules de conversion soient égales entre elles, ce qui permet que le dispositif d'alimentation délivre une puissance électrique stable et adaptée au besoin des charges électriques et assure l'équilibre de fonctionnement du système de distribution électrique. En résumé, l'invention permet donc de passer d'une architecture de distribution en parallèle à basse tension à une architecture de distribution en série à moyenne tension. L'invention est particulièrement avantageuse lorsqu'elle est mise en œuvre dans un système de distribution électrique qui est un centre de traitement de données dans lesquels les charges électriques sont disposées dans des baies.

Avantageusement, pour chaque module de conversion, maintenir la puissance apparente du module de conversion égale à une valeur cible s'effectue en augmentant la puissance réactive du module de conversion lorsque la valeur de puissance active de fonctionnement imposée par la charge électrique associée diminue et en diminuant la puissance réactive du module de conversion lorsque la valeur de puissance active de fonctionnement imposée par la charge électrique associée augmente.

Avantageusement, pour chaque module de conversion, l'amplitude de la tension alternative aux bornes d'entrée du module de conversion est régulée pour être maintenue entre une limite basse de tension et une limite haute de tension.

L'invention concerne également un système de distribution électrique, en particulier un centre de traitement de données, comprenant :
- un dispositif d'alimentation, configuré pour délivrer un premier courant, qui est un courant alternatif monophasé, associé à une première tension, qui est une tension alternative monophasée comprise entre 10 kV et 35 kV,
- une pluralité de charges électriques, qui sont par exemple des serveurs de données disposés dans des baies,
- une pluralité de module de conversion, les modules de conversion étant respectivement associés aux charges électriques,
   ∘ chaque module de conversion comprenant des bornes d'entrée et des bornes de sortie,
   ∘ les bornes d'entrée de tous les modules de conversion étant connectées en série entre elles et au dispositif d'alimentation, le premier courant circulant ainsi entre les bornes d'entrée de tous les modules de conversion, la première tension étant ainsi appliquée à l'ensemble des modules de conversion,
   ∘ les bornes de sortie de chaque module de conversion étant connectées à la charge électrique associée au module de conversion

Chaque module de conversion de ce centre de traitement de données comprend :
   - un groupe de transistors, connecté entre les bornes d'entrée du module de conversion,
   - au moins un élément capacitif, connecté au groupe de transistors,
   - un convertisseur, connecté au groupe de transistors et aux bornes de sortie du module de conversion, et
   - une unité électronique de commande, configurée pour commander chaque transistor du groupe de transistors.
De plus, le groupe de transistors de chaque module de conversion est configuré pour délivrer au convertisseur du module de conversion une tension continue et un courant continu, à partir de la tension alternative aux bornes d'entrée du module de conversion et du courant alternatif circulant entre les bornes d'entrée du module de conversion et le convertisseur de chaque module de conversion est configuré pour délivrer à la charge électrique associée une tension continue constante comprise entre 48 V et 400 V et un courant continu, à partir de la tension continue et du courant continu délivrés par le groupe de transistors du module de conversion.
En outre, l'unité électronique de commande de chaque module de conversion est configurée pour réguler l'amplitude de la tension alternative aux bornes d'entrée du module de conversion et le déphasage entre la tension alternative aux bornes d'entrée du module de conversion et le courant alternatif circulant entre les bornes d'entrée du module de conversion, en commandant le groupe de transistors du module de conversion et au moyen de l'au moins un élément capacitif du module de conversion.

Suivant d'autres aspects avantageux de l'invention, le système de distribution électrique comprend une ou plusieurs des caractéristiques suivantes, prises isolément ou suivant toutes les combinaisons techniquement possibles :
- Le système de distribution électrique est configuré pour être commandé par le procédé de commande tel que décrit ci-dessus. Pour chaque module de conversion, l'unité électronique de commande est configurée pour mettre en œuvre la régulation de la tension continue délivrée par le module de conversion à la charge électrique associée et le maintien de la puissance apparente du module de conversion égale à la valeur cible.
- Le groupe de transistors de chaque module de conversion comprend des transistors bipolaires à grille isolée.
- La pluralité de modules de conversion comprend au moins dix modules de conversion.
- Chaque module de conversion comprend, en outre, un circuit de protection configuré pour faire circuler le courant alternatif monophasé délivré par le dispositif d'alimentation entre les bornes d'entrée du module de conversion en court-circuitant le groupe de transistors en cas de défaillance du module de conversion et/ou de la charge électrique associée.
- Le dispositif d'alimentation est configuré pour délivrer un courant alternatif triphasé et une tension alternative comprise entre 10 kV et 35 kV par phase, le premier courant correspondant à une première phase du courant alternatif triphasé et la première tension correspondant à une première phase de la tension alternative triphasée, et la pluralité de modules de conversion forme un premier groupe de modules de conversion. De plus, le système de distribution électrique comprend, en outre, un deuxième groupe de modules de conversion et un troisième groupe de modules de conversion, les modules de conversion du deuxième groupe de modules de conversion et du troisième groupe de modules de conversion étant identiques aux modules de conversion du premier groupe de modules de conversion, et étant chacun respectivement associé à une charge électrique. En outre :
   ∘ les modules de conversion du premier groupe de modules de conversion sont connectés en série au dispositif d'alimentation de sorte que le premier courant circule entre les bornes d'entrée de tous les modules de conversion du premier groupe et de sorte que la première tension est appliquée à l'ensemble des modules de conversion du premier groupe,
   ∘ les modules de conversion du deuxième groupe de modules de conversion sont connectés en série au dispositif d'alimentation de sorte qu'un deuxième courant alternatif monophasé, correspondant à une deuxième phase du courant alternatif triphasé, circule entre les bornes d'entrée de tous les modules de conversion du deuxième groupe et de sorte qu'une deuxième tension alternative monophasée, correspondant à une deuxième phase de la tension alternative triphasée, est appliquée à l'ensemble des modules de conversion du deuxième groupe, et
   ∘ les modules de conversion du troisième groupe de modules de conversion sont connectés en série au dispositif d'alimentation de sorte qu'un troisième courant alternatif monophasé, correspondant à une troisième phase du courant alternatif triphasé, circule entre les bornes d'entrée de tous les modules de conversion du troisième groupe et de sorte qu'une troisième tension alternative monophasée, correspondant à une troisième phase de la tension alternative triphasée, est appliquée à l'ensemble des modules de conversion du troisième groupe.
- Le système de distribution électrique est un centre de traitement de données comprenant une pluralité de baies, chaque charge électrique et chaque module de conversion étant associé à une baie, chaque charge électrique étant disposée dans la baie associée, chaque module de conversion étant fixé à la baie associée ou intégré dans la baie associée.

L'invention apparaîtra plus clairement à la lecture de la description qui va suivre, donnée uniquement à titre d'exemple non limitatif, et faite en référence aux dessins dans lesquels :
[Fig. 1] La figure 1 est une représentation schématique d'un système de distribution électrique conforme à l'invention, comprenant plusieurs modules de conversion.
[Fig. 2] La figure 2 est une représentation schématique de l'un des modules de conversion du système de distribution électrique de la figure 1.
[Fig. 3] La figure 3 regroupe deux diagrammes illustrant un réglage de la puissance apparente des modules de conversion du système de distribution électrique de la figure 1.
[Fig. 4] La figure 4 est un diagramme illustrant l'impact du déphasage entre la tension et le courant d'un module de conversion sur la puissance active et sur la puissance réactive du module de conversion, le module de conversion appartenant au système de distribution électrique de la figure 1.
[Fig. 5] La figure 5 est une représentation schématique d'une partie du système de distribution électrique de la figure 1.

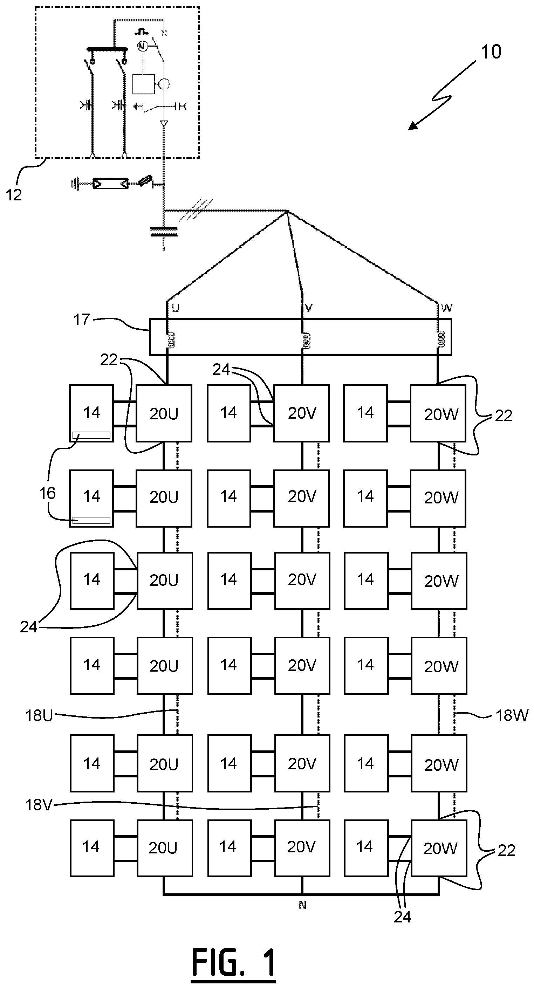

Un système de distribution électrique 10 conforme à l'invention est représenté schématiquement à la figure 1.

Dans l'exemple, le système de distribution électrique 10 est un centre de traitement de données.

La description qui suit porte sur la mise en œuvre de l'invention à un centre de traitement de données, mais est applicable à d'autres types de systèmes de distribution électrique. Ainsi, en variante, le système de distribution électrique est un système d'alimentation de machines-outils, par exemple dans le domaine des semi-conducteurs, un système d'alimentation de dispositifs de régulation, ou encore un système de distribution électrique d'un bâtiment. En pratique, l'invention est utilisable dans tout domaine industriel ou commercial comportant des groupes de charges électriques homogènes et réparties, fonctionnant sous basse tension et moyenne puissance, c'est-à-dire consommant une puissance d'une dizaine à centaine de kW, et étant relativement stables dans le temps.

Le centre de traitement de données 10 comprend un dispositif d'alimentation 12, qui est connecté à un réseau d'alimentation externe au centre de traitement de données 10 et qui est configuré pour délivrer un système de courant triphasé, c'est-à-dire un courant alternatif triphasé et une tension alternative comprise entre 10 kV et 35 kV par phase. Cette plage de 10 kV à 35 kV est plus généralement désignée comme moyenne tension. Le dispositif d'alimentation 12 délivre ainsi trois phases, représentées respectivement par les lettres U, V et W sur la figure 1.

Dans la suite de la description, on désigne en tant que premier courant et première tension le courant alternatif et la tension alternative correspondant à une première phase du courant alternatif triphasé et de la tension alternative triphasée délivrés par le dispositif d'alimentation 12 ; on désigne en tant que deuxième courant et deuxième tension le courant alternatif et la tension alternative correspondant à une deuxième phase du courant alternatif triphasé et de la tension alternative triphasée délivrés par le dispositif d'alimentation 12 ; et on désigne en tant que troisième courant et troisième tension le courant alternatif et la tension alternative correspondant à une troisième phase du courant alternatif triphasé et de la tension alternative triphasée délivrés par le dispositif d'alimentation 12.

Le dispositif d'alimentation 12 comprend également un neutre, représenté par la lettre N sur la figure 1.

Le fonctionnement du dispositif d'alimentation 12, connu en soi, n'est pas détaillé.

Le centre de traitement de données 10 comprend une pluralité de baies 14. Chaque baie 14 (en anglais *rack*) comprend au moins une charge électrique 16. Chaque charge électrique d'une baie correspond à un équipement appartenant à un système d'information, tels que des ordinateurs centraux, des serveurs, des dispositifs de stockage de données, des équipements réseaux et/ou des équipements de télécommunication. De préférence, les charges électriques d'une baie 14 sont des serveurs de données.

Seulement deux charges électriques 16 sont représentées à la figure 1 pour la clarté de la figure. En pratique, il est entendu que chacune des baies 14 comprend au moins une charge électrique 16.

De préférence, les baies 14 du centre de traitement de données 10 sont des armoires de taille normalisée, de manière connue en soi. Ainsi, la conception des baies 14, connue en soi, n'est pas détaillée.

En pratique, les charges électriques 16 doivent être alimentées avec une tension continue constante comprise entre 48 V et 400 V, par exemple égale à 48 V. Cette plage de 48 V à 400 V est plus généralement désignée comme basse tension.

Les charges électriques 16 d'une baie 14 consomment une puissance électrique, dite puissance active ou encore puissance réelle, qui dépend de la nature de la charge électrique et de l'état de fonctionnement de la charge électrique, notamment de son état allumé ou éteint et de son pourcentage d'utilisation. En pratique, la puissance active consommée par les charges électriques 16 d'une baie 14 peut s'élever jusqu'à 100 kW, voire plus. Autrement dit, une baie 14 fonctionne en moyenne puissance, c'est-à-dire entre 10 kW et 100 kW.

Pour permettre l'alimentation électrique des baies 14 à partir du dispositif d'alimentation 12, le centre de traitement de données 10 comprend autant de modules de conversion que de baies 14. Ainsi, chaque module de conversion est respectivement associé à une baie 14. Autrement dit, le centre de traitement de données 10 comprend autant de baies que de modules de conversion.

Avantageusement, chaque module de conversion est fixé à la baie 14 associée ou est intégré dans la baie associée, en étant préférentiellement disposé dans un boîtier ou un tiroir aux dimensions normalisées.

En pratique, les modules de conversion sont répartis en trois groupes : un premier groupe de modules de conversion 20U est connecté à la première phase U du dispositif d'alimentation 12, un deuxième groupe de modules de conversion 20V est connecté à la deuxième phase V du dispositif d'alimentation et un troisième groupe de modules de conversion 20W est connecté à la troisième phase W du dispositif d'alimentation.

Avantageusement, les modules de conversion des trois groupes de modules de conversion sont tous identiques.

De préférence, chaque groupe de modules de conversion comprend un nombre minimal de modules de conversion 20U, 20V ou 20W permettant de tenir les contraintes d'un réseau de moyenne tension telles que définies dans la norme IEC 62271-1 entrée en vigueur le 10 avril 2021, plus précisément telles que définies au chapitre 5.3 de cette norme (Niveau d'isolement assigné (*U_{d}, Uₚ, Uₛ*))*.* Cette norme, pour appareillage moyenne tension, définit notamment la tension maximale permanente acceptable, la surtension transitoire maximale acceptable pendant une durée d'une minute, ou encore la tension d'onde de choc de foudre devant être supportée. Ainsi, chaque groupe de modules de conversion comprend de préférence au moins 10 modules de conversion, de préférence encore entre 10 et 20 modules de conversion, par exemple 16 modules de conversion. De préférence encore, tous les groupes de modules de conversion comprennent le même nombre de modules de conversion.

Le centre de traitement de données comprend également un filtre 17, qui est un filtre moyenne tension, qui filtre les première, deuxième et troisième tensions U, V et W en amont des modules de conversion 20U, 20V et 20W. Le filtre 17 comprend par exemple trois éléments inductifs, tels que des bobines. Le filtre 17 permet en outre d'atténuer les variations transitoires de tension des première, deuxième et troisième phases, qui sont susceptibles d'endommager ou de perturber les modules de conversion 20U, 20V et 20W.

Dans la suite de la description, on décrit uniquement les modules de conversion 20U du premier groupe de modules de conversion. La conception et le fonctionnement des modules de conversion 20V et 20W des deuxième et troisième groupes de modules de conversion sont identiques à ceux des modules de conversion 20U du premier groupe de modules de conversion. Par analogie, tout ce qui est décrit à propos des modules de conversion 20U et la première phase U du dispositif d'alimentation 12 est également applicable aux modules de conversion 20V et à la deuxième phase V ainsi qu'aux modules de conversion 20W et à la troisième phase W.

Chaque module de conversion 20U comprend des bornes d'entrée 22 et des bornes de sortie 24.

Les bornes d'entrée 22 de tous les modules de conversion 20U sont connectées en série entre elles et à la phase U du dispositif d'alimentation 12. Ainsi, le premier courant délivré par le dispositif d'alimentation 12 circule entre les bornes d'entrée 22 de tous les modules de conversion 20U et la première tension est appliquée à l'ensemble des modules de conversion 20U. Autrement dit, les modules de conversion 20U sont tous connectés en série à la phase U de sorte que le premier courant circule entre les bornes d'entrée 22 de chacun des modules de conversion 20U et la première tension s'applique aux bornes du premier groupe de modules de conversion 20U, c'est-à-dire que la première tension est appliquée à l'ensemble des modules de conversion 20U.

Les modules de conversion 20U sont également connectés en série au neutre N. Ainsi, la première tension correspond à la tension mesurée entre la phase U au niveau du dispositif d'alimentation 12 et le neutre N.

Puisqu'il en est de même pour les modules de conversion 20V et 20W, le centre de traitement de données 10, qui comprend trois groupes de modules de conversion chacun connectés à une phase du dispositif d'alimentation 10 et alimentés en moyenne tension, est ainsi équivalent à une charge moyenne tension triphasée en connexion étoile.

Les bornes de sortie 24 d'un module de conversion 20U sont connectées à la baie 14 associée à ce module de conversion 20U.

En outre, chaque module de conversion 20U comprend un convertisseur, qui est connecté aux bornes de sortie 24 du module de conversion et qui est configuré pour délivrer à la baie 14 associée à ce module de conversion 20U une tension continue constante comprise entre 48 V et 400 V, c'est-à-dire une basse tension, et un courant continu, à partir de la tension alternative aux bornes d'entrée 22 du module de conversion 20U et à partir du courant alternatif circulant entre les bornes d'entrée 22 du module de conversion, c'est-à-dire à partir du premier courant. Le convertisseur de chaque module de conversion 20U permet ainsi de délivrer une puissance active à la baie 14 associée au module de conversion, de sorte à alimenter électriquement l'au moins une charge électrique 16 de la baie.

Ainsi, chaque module de conversion 20U délivre la puissance active requise pour le fonctionnement des charges électriques 16 de la baie 14 associée au module de conversion à partir de la première tension et du premier courant grâce à son convertisseur.

Le centre de traitement de données 10 comprend également trois bus de données, notés respectivement 18U, 18V et 18W.

Le bus de données 18U relie entre eux tous les modules de conversion 20U du premier groupe et permet l'échange de données entre les modules de conversion 20U. De préférence, le bus de données 18U est un bus de données CAN, de l'acronyme anglais *Controller Area Network,* défini par la norme ISO 11898.

De même, le bus de données 18V relie entre eux tous les modules de conversion 20V du deuxième groupe et le bus de données 18W relie entre eux tous les modules de conversion 20W du troisième groupe.

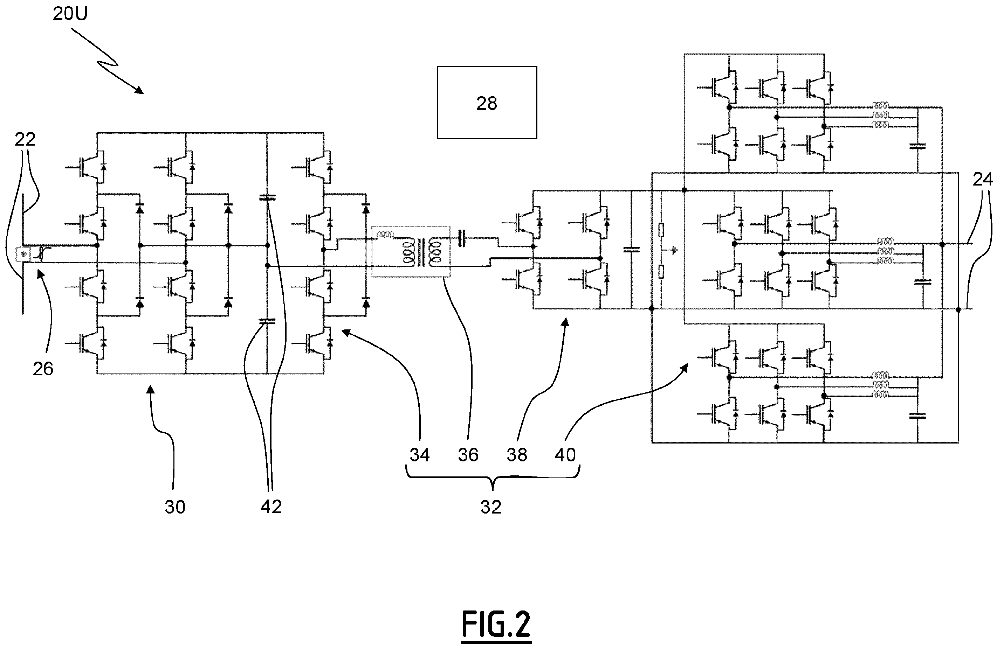

On décrit à présent, en référence à la figure 2, un exemple de module de conversion 20U appartenant au centre de traitement de données 10.

Avantageusement, le module de conversion 20U comprend un circuit de protection 26 qui est connecté entre les bornes d'entrée 22 du module de conversion et qui est configuré pour faire circuler le premier courant délivré par le dispositif d'alimentation 12 entre les bornes d'entrée 22 du module de conversion 20U en court-circuitant le groupe de transistors 30 en cas de défaillance du module de conversion et/ou de l'au moins une charge électrique 16 de la baie 14 associée au module de conversion.

Lorsqu'un module de conversion 20U est court-circuité par son circuit de protection 26, il est dit inactif et ne peut pas délivrer de puissance à la baie associée. Dans le cas contraire, il est dit actif et est en mesure d'alimenter électriquement la baie associée.

Dans l'exemple, le circuit de protection 26 est un interrupteur, dit interrupteur bypass, ou pontage. L'interrupteur 26 est normalement ouvert. Lorsqu'il est commandé pour être fermé, l'interrupteur 26 permet de court-circuiter le module de conversion 20U en connectant directement entre elles les bornes d'entrée 22, permettant ainsi de déconnecter un module de conversion 20U et la baie 14 associée sans interrompre la connexion en série des autres modules de conversion 20U du premier groupe de modules de conversion.

Le module de conversion 20U comprend une unité électronique de commande 28.

Le module de conversion 20U comprend un groupe de transistors 30, connecté entre les bornes d'entrée 22 du module de conversion 20U. Autrement dit, le premier courant généré par le dispositif d'alimentation 12 circule entre les bornes d'entrée 22 du module de conversion 20U dans le premier groupe de transistors 30.

L'unité électronique de commande 28 est configurée pour commander chaque transistor du groupe de transistors 30.

En pratique, les transistors du groupe de transistors 30 sont commandés par l'unité électronique de commande 28 pour que le groupe de transistors 30 agisse comme un redresseur, c'est-à-dire comme un convertisseur AC-DC, ou convertisseur alternatif-continu. Ainsi, le groupe de transistor 30 est alimenté via les bornes d'entrée 22 par le premier courant et la première tension délivrés par le dispositif d'alimentation 12 et délivre une tension intermédiaire qui est une tension continue de préférence comprise entre 600 V et 1000 V. Autrement dit, le groupe de transistor 30 est commandé pour convertir la première tension alternative, comprise entre 10 kV et 35 kV, en une tension intermédiaire continue comprise entre 600 V et 1000 V.

Le fonctionnement du groupe de transistors 30 en tant que redresseur, connu en soi, n'est pas décrit plus en détail.

De préférence, les transistors du groupe de transistors 30 sont des transistors à effet de champ à grille métal-oxyde, plus couramment nommés MOSFETs, acronyme anglais de *metal-oxide-semiconductor field-effect transistor.* De préférence encore, les transistors sont de type Mosfet carbure de silicium, connu sous l'acronyme « SIC MOSFET ». L'utilisation de tels transistors permet au groupe de transistors de fonctionner de manière fiable tout en maximisant son rendement. En outre, ces transistors permettent également des fréquences de fonctionnement plus élevées participant ainsi à l'optimisation du centre de traitement de données 10.

En variante, les transistors du groupe de transistors 30 sont des transistors bipolaires à grille isolée, plus couramment nommés IGBT, acronyme de l'anglais *Insulated-gate bipolar transistor.*

Comme décrit ci-dessus, le module de conversion 20U comprend un convertisseur noté 32, connecté d'une part au groupe de transistors 30 et d'autre part aux bornes de sortie 24 du module de conversion. Le convertisseur 32 permet de convertir la tension intermédiaire continue délivrée par le groupe de transistors 30 en la basse tension délivrée à la baie 14 associée au module de conversion.

Le convertisseur 32 comprend un premier groupe de transistors 34, un transformateur moyenne fréquence 36 et un deuxième groupe de transistors 36, qui forment ensemble un premier étage de conversion DC-DC, qui convertit la tension intermédiaire en une tension continue de plus faible voltage, dans l'exemple de 400 V. La valeur de cette tension peut être différente de 400 V mais est préférentiellement comprise entre 200 V et 600 V. Cette plage de tension correspond à des tensions pouvant être directement utilisées dans des baies standards, munies de blocs d'alimentation (en anglais *power supply unit,* connu sous l'acronyme PSU) pouvant transformer cette tension vers une tension de 48 V et/ou 12 V.

Le transformateur moyenne fréquence 36 assure l'isolement entre la moyenne tension et la basse tension selon les contraintes définies dans les normes IEC 60076-3 en vigueur en 2013 et IEC 62271-1 en vigueur le 10 avril 2021.

Le fonctionnement du premier étage de conversion DC-DC formé par le premier groupe de transistors 34, le transformateur moyenne fréquence 36 et le deuxième groupe de transistors 38, connu en soi, n'est pas détaillé. À titre d'exemples, le premier étage de conversion peut être formé par un convertisseur LLC ou par un convertisseur DAB, acronyme de l'anglais *dual active bridge.*

De préférence, l'ensemble du premier étage de conversion DC-DC forme un transformateur SST, acronyme de l'anglais *solid-state transformer.*

Dans l'exemple, le convertisseur 32 comprend également un deuxième étage de conversion DC-DC, formé par un troisième groupe de transistors 40, qui est connecté au deuxième groupe de transistors 38 et qui convertit la tension continue de 400 V obtenue grâce au premier étage de conversion DC-DC en une tension continue de plus faible voltage, dans l'exemple de 48 V. La valeur de cette tension peut être différente de 48 V mais est préférentiellement comprise entre 48 V et 54 V.

Le fonctionnement du deuxième étage de conversion DC-DC formé par le troisième groupe de transistors 40, connu en soi, n'est pas détaillé. À titre d'exemples, le deuxième étage de conversion peut être formé par un convertisseur Buck, également connu en tant que hacheur série.

Le deuxième étage de conversion DC-DC du convertisseur 32 est connecté aux bornes de sortie 24 du module de conversion 20U, de sorte que la tension continue de 48 V est délivrée aux bornes de sortie 24 et ainsi à la baie 14 associée au module de conversion.

Le deuxième étage de conversion DC-DC du convertisseur 32 est optionnel : lorsqu'il n'est pas présent, le premier étage de conversion DC-DC du convertisseur 32 est connecté aux bornes de sortie 24 du module de conversion 20U, de sorte que la tension continue de 400 V est directement délivrée aux bornes de sortie 24 et ainsi à la baie 14 associée au module de conversion. En pratique, le choix d'intégrer ou non un deuxième étage de conversion DC-DC au convertisseur 32 du module de conversion 20U est fait en fonction de la tension de fonctionnement des charges électriques 16 de la baie 14 associée.

Grâce au transformateur moyenne fréquence 36, le module de conversion 20U bénéficie d'une isolation galvanique entre ses bornes d'entrée 22 et ses bornes de sortie 24, avec un niveau isolement compris entre 20kV et 50kV entre ses bornes d'entrée 22 et ses bornes de sortie 24, ce qui offre une protection aux charges électriques 16 de la baie 14 associée.

Grâce au groupe de transistors 30 fonctionnant tel un redresseur et grâce aux deux étages de conversion du module de conversion 20U, les charges électriques 16 de la baie 14 associée bénéficient d'une protection efficace en évitant la transmission de défauts présents dans l'alimentation délivrée par le dispositif d'alimentation, tels que des pics et creux de tension.

Le module de conversion 20U comprend au moins un élément capacitif 42, connecté au groupe de transistors 30 et, dans l'exemple, également connecté au deuxième groupe de transistors 34 du convertisseur 32. Dans l'exemple, l'au moins un élément capacitif 42 est formé par deux condensateurs 42. En variante non-représenté de l'invention, l'au moins un élément capacitif 42 comprend un nombre différent de condensateurs et/ou un ou plusieurs autres composants électroniques capacitifs.

On décrit à présent un procédé de commande du centre de traitement de données 10, le procédé de commande étant conforme à l'invention.

Le procédé de commande est décrit en référence au premier groupe de modules de conversion 20U, c'est-à-dire en référence à la première phase U délivrée par le dispositif d'alimentation 12. Ce procédé de commande s'applique de la même manière aux deuxième et troisième groupes de modules de conversion 20V, 20W.

Dans la suite de la description, lorsqu'il est fait référence à une tension, cette tension est considérée à la fréquence fondamentale du réseau, c'est-à-dire à la fréquence fondamentale délivrée par le dispositif d'alimentation 12, par exemple égale à 50 Hz. Ainsi, les phénomènes d'harmonique ne sont pas décrits.

Pour le premier groupe de modules de conversion 20U du centre de traitement de données 10, les paramètres suivants sont imposés :
- La puissance active consommée par chaque baie 14 est imposée par l'au moins une charge électrique 16 de la baie et correspond ainsi à la puissance active de fonctionnement de l'au moins une charge électrique de la baie.
- La première tension, c'est-à-dire la tension mesurée entre la phase U au niveau du dispositif d'alimentation 12 et le neutre N et s'appliquant à l'ensemble des modules de conversion 20U, est imposée par le dispositif d'alimentation 12 et est constante.
- Le premier courant, c'est-à-dire le courant délivré par le dispositif d'alimentation 12 et circulant dans tous les modules de conversion 20U, est imposé par les charges électriques 16 des baies 14 et résulte de la somme des courants absorbés par les charges électriques 16, en négligeant les pertes en ligne.
- La puissance apparente délivrée par le dispositif d'alimentation 12 est imposée par la première tension et par le premier courant, car elle est proportionnelle au produit de la première tension par le premier courant.

De plus, l'architecture du centre de traitement de données 10, avec les modules de conversion 20U connectés en série à la première phase du dispositif d'alimentation 12, implique que la somme de la tension aux bornes d'entrée 22 de chaque module de conversion 20U dépend de la première tension délivrée par le dispositif d'alimentation 12 et de la régulation de puissance mise en œuvre par le procédé de commande. En pratique, la première tension délivrée par le dispositif d'alimentation 12 est égale à la somme de la somme de la tension aux bornes d'entrée 22 de chaque module de conversion 20U et de la tension aux bornes du filtre 17, pour la première phase.

En outre, pour chaque module de conversion 20U, la tension entre les bornes d'entrée du module de conversion doit être contrôlée en étant maintenue entre une limite basse prédéfinie et une limite haute prédéfinie, notamment pour assurer le bon fonctionnement du groupe de transistors 30.

Puisque la première tension est constante, cette architecture du centre de données 10 nécessite un équilibrage permanent de la tension aux bornes d'entrée de chaque module de conversion 20U, pour que la somme des tensions aux bornes de chacun des modules de conversion 20U reste équilibrée et pour que la tension entre les bornes d'entrée de chaque module de conversion soit maintenue entre la limite basse prédéfinie et la limite haute prédéfinie. Le procédé de commande de l'invention vise donc à équilibrer les tensions entre tous les modules de conversion 20U.

De plus, puisque le premier courant est commun à tous les modules de conversion 20U, équilibrer les tensions des modules de conversion 20U équivaut à équilibrer les puissances apparentes des modules de conversion. En effet, la puissance apparente d'un module de conversion 20U est proportionnelle au produit du premier courant circulant entre ses bornes d'entrée 22 et de la tension entre ses bornes d'entrée, le premier courant étant imposé.

Le problème est alors que les variations de puissance active consommée par une baie 14 peut entraîner un déséquilibrage de la puissance apparente du module de conversion 20U associé : le procédé de commande de l'invention vise à empêcher ce déséquilibrage.

Ainsi, pour maintenir l'équilibre du fonctionnement du premier groupe de modules de conversion 20U, l'objectif du procédé de commande de l'invention est de répartir la puissance apparente délivrée par le dispositif d'alimentation 12 entre tous les modules de conversion 20U, de sorte que les puissances apparentes de tous les modules de conversion soient égales entre elles. En outre, la somme des puissances apparentes des modules de conversion étant égale à la puissance apparente délivrée par le dispositif d'alimentation 12, les puissances apparentes de tous les modules de conversion sont en outre constantes lorsque la puissance apparente délivrée par le dispositif d'alimentation 12 est constante.

Le procédé de commande de l'invention est particulièrement pertinent dans des applications où le premier courant est relativement stable, c'est-à-dire dans des applications où la puissance électrique consommée par l'ensemble des charges électriques 16 est relativement homogène, autrement dit dans des applications où la puissance active consommée par les baies 14 varie peu au cours du temps.

Ainsi, en première approximation, il est possible de considérer que la somme des puissances actives consommées par l'ensemble des baies 14 reste homogène et uniformément répartie au cours du temps, de sorte que la puissance apparente délivrée par le dispositif d'alimentation 12 reste également constante au cours du temps, et donc que la puissance apparente de chaque module de conversions 20U reste également constante au cours du temps.

La valeur cible à laquelle on cherche à maintenir égale la puissance apparente d'un module de conversion 20U est donc égale à la valeur de la puissance apparente délivrée par le dispositif d'alimentation 12 divisée par le nombre de modules de conversion 20U connectés en série au dispositif d'alimentation 12, en ne comptant que les modules de conversion 20U actifs, c'est-à-dire en ne comptant pas d'éventuels modules de conversion 20U court-circuités par leur circuit de protection 26.

Pour atteindre cet objectif de puissance apparente d'un module de conversion 20U égale entre tous les modules de conversion malgré la variabilité de la puissance active consommée par les charges électriques 16 de la baie 14 associée au module de conversion, le procédé de commande de l'invention vise à faire varier la puissance réactive du module de conversion. Autrement dit, pour chaque module de conversion 20U, les variations de puissance active consommée par la baie 14 associée sont compensées par une variation de la puissance réactive du module de conversion.

Ainsi, chaque module de conversion 20U est commandé pour :
- réguler la tension continue délivrée par le module de conversion 20U à la baie 14 associée, sur la base de la valeur de la puissance active de fonctionnement imposée par l'au moins une charge électrique 16 de la baie, pour que la puissance active délivrée par le module de conversion 20U soit égale à cette puissance active de fonctionnement, et
- maintenir la puissance apparente du module de conversion 20U égale à la valeur cible, pour que les puissances apparentes de tous les modules de conversion (20U) soient égales entre elles, en régulant l'amplitude de la tension alternative aux bornes d'entrée 22 du module de conversion et un déphasage entre la tension alternative aux bornes d'entrée du module de conversion et le courant alternatif circulant entre les bornes d'entrée du module de conversion, sur la base :
   ∘ de la puissance active délivrée par le module de conversion 20U à la baie 14 associée, imposée par l'au moins une charge électrique 16 de la baie,
   ∘ de la première tension et du premier courant délivrés par le dispositif d'alimentation 12 à la pluralité de modules de conversion 20U, et
   ∘ du nombre de modules de conversion 20U actifs.

En pratique, la régulation de la tension continue délivrée par le module de conversion 20U à la baie 14 associée consiste à maintenir constante la basse tension délivrée à la baie 14, malgré les variations de puissance active de fonctionnement de la charge électrique 16 de la baie, car ces variations de puissance active de fonctionnement entraîneraient des variations de la tension délivrée par le module de conversion à la baie en l'absence de régulation.

Avantageusement, chaque module de conversion 20U connaît les mesures de la première tension et du premier courant ainsi que le nombre de modules de conversion 20U actifs grâce au bus de données 18U, qui permet l'échange de ces informations entre tous les modules de conversion 20U.

Autrement dit, chaque module de conversion 20U va agir sur le déphasage entre la tension entre ses bornes d'entrée 22 et le premier courant circulant entre ses bornes d'entrée, ainsi que sur l'amplitude de la tension entre ses bornes d'entrée, pour augmenter ou diminuer sa puissance réactive en fonction des diminutions ou augmentations de la puissance active délivrée à la baie associée, de sorte à maintenir une puissance apparente constante.

Ainsi, le maintien de la puissance apparente d'un module de conversion 20U égale à la valeur cible s'effectue en augmentant la puissance réactive du module de conversion lorsque la valeur de puissance active de fonctionnement imposée par l'au moins une charge électrique de la baie associée diminue et en diminuant la puissance réactive du module de conversion lorsque la valeur de puissance active de fonctionnement imposée par l'au moins une charge électrique de la baie associée augmente.

En outre, la régulation de l'amplitude de la tension alternative aux bornes d'entrée 22 du module de conversion 20U a pour objectif de maintenir cette tension entre la limite basse prédéfinie et la limite haute prédéfinie.

En pratique, le réglage de l'amplitude de la tension alternative aux bornes d'entrée 22 du module de conversion 20U et le réglage du déphasage entre la tension alternative aux bornes d'entrée du module de conversion et le courant alternatif circulant entre les bornes d'entrée du module de conversion, c'est-à-dire la régulation la puissance apparente en entrée d'un module de conversion 20U, sont réalisés par l'unité électronique de commande 28 du module de conversion, en commandant le groupe de transistors 30 et au moyen de l'au moins un élément capacitif 42, qui forme alors une source de tension continue pour le groupe de transistors 30.

Le groupe de transistors 30 d'un module de conversion 20U a ainsi deux fonctions : d'une part, redresser la tension alternative entre les bornes d'entrée 22 du module de conversion pour délivrer la tension intermédiaire continue au convertisseur 32 puis à la baie 14 associée, et d'autre part réguler la puissance réactive du module de conversion.

Ainsi, les variations d'amplitude et de phase de la tension entre les bornes d'entrée 22 d'un module de conversion 20U permettent la répartition de la puissance apparente de ce module de conversion entre puissance active et puissance réactive.

En pratique, lorsque le centre de traitement de données 10 est en régime permanent, c'est-à-dire lorsque l'intensité du premier courant est sensiblement constante, alors l'amplitude de la tension entre les bornes d'entrée 22 d'un module de conversion 20U reste constante et seule le déphasage entre la tension alternative aux bornes d'entrée du module de conversion et le courant alternatif circulant entre les bornes d'entrée du module de conversion varie lorsque la puissance active délivrée à la baie associée varie pour maintenir une puissance apparente constante.

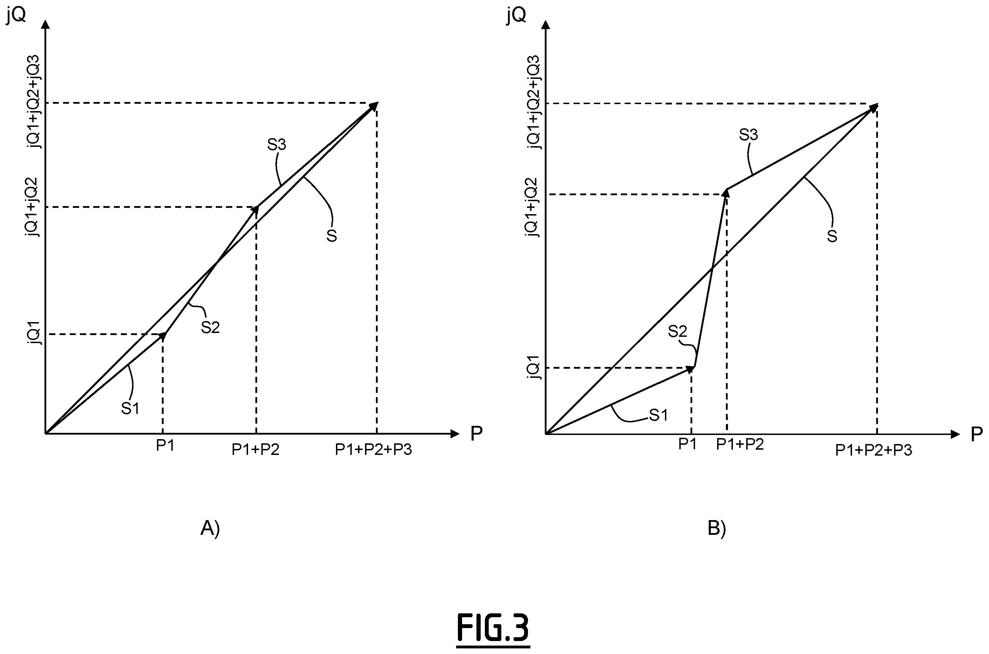

Deux diagrammes illustrant ce réglage de la puissance réactive de chaque module de conversion 20U pour conserver une puissance apparente constante sont illustrées sur la figure 3. Sur cette figure, deux diagrammes simplifiés sont représentés, correspondant chacun à un cas hypothétique où le premier groupe de modules de conversion 20U comprendrait trois modules de conversion 20U. Les puissances apparentes de ces trois modules sont représentées respectivement S1, S2 et S3 et se décomposent chacune en la somme d'une puissance active P1, P2, P3 et d'une puissance réactive Q1, Q2 et Q3.

Sur le diagramme A), un fonctionnement nominal est illustré, dans lequel les puissances actives P1, P2, P3 délivrées par chacun des trois modules de conversion 20U à leurs baies 14 respectives sont proches.

Sur le diagramme B), un fonctionnement déséquilibré est illustré, non-représentatif du fonctionnement normal du centre de traitement de données 10, dans lequel le second module de conversion 20U délivre à sa baie 14 respective une puissance active P2 significativement plus faible que les puissances actives P1, P3 délivrées par les premier et troisième modules de conversion à leurs baies respectives. On comprend alors qu'un tel fonctionnement déséquilibré entraîne l'apparition d'une puissance réactive importante dans le premier groupe de modules de conversion 20U, ce qui diminue l'efficacité du centre de traitement de données et notamment son rendement.

Sur ces représentations graphiques est illustrée la répartition des puissances actives et réactives entre les trois modules de conversion 20U, en application de la méthode de Boucherot, également désigné en tant que théorème de Boucherot. On constate alors que la puissance apparente totale S délivrée par de dispositif d'alimentation 12 est égale à la somme des puissances apparentes S1, S2 et S3 et que, pour conserver une puissance apparente égale entre tous les modules de conversion 20U, chaque module de conversion agit comme une impédance variable, c'est-à-dire que chaque module de conversion fait varier son facteur de puissance, correspondant au ratio de sa puissance active sur sa puissance apparente, en modifiant sa puissance réactive en fonction de sa puissance active.

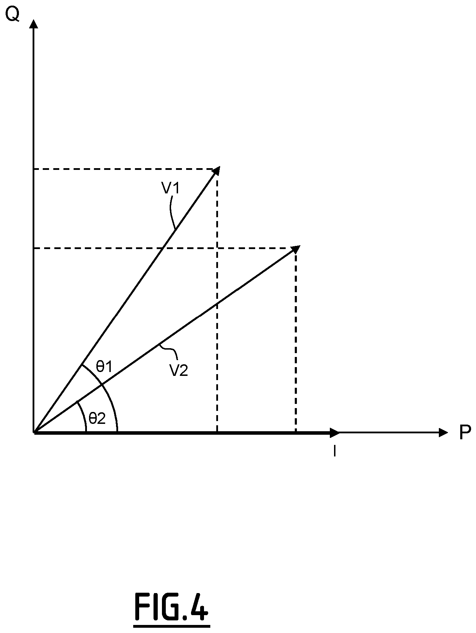

Ce concept est illustré sur le diagramme de la figure 4, sur lequel sont représentés le premier courant circulant entre les bornes d'entrée 22 d'un module de conversion 20U, noté « I », ainsi que deux tensions théoriques distinctes entre les bornes d'entrée du module de conversion:
- une première tension V1, correspondant à un déphasage θ1 entre le premier courant et la tension, et
- une deuxième tension V2, correspondant à un déphasage θ2 entre le premier courant et la tension, le déphasage θ2 étant plus faible que le déphasage θ1.

Sur ce graphique, l'abscisse représente la puissance active P du module de conversion 20U et l'ordonnée représente la puissance réactive Q du module de conversion. On comprend alors que plus le déphasage entre la tension et le courant est important et plus la puissance active P diminue et la puissance réactive Q augmente.

Pour mettre en œuvre la régulation de puissance réactive d'un module de conversion 20U, c'est-à-dire l'amplitude de la tension entre ses bornes d'entrée 22 et le déphasage entre cette tension et le premier courant, l'unité électronique de commande 28 de chaque module de conversion 20U obtient tout d'abord les données suivantes :
- le nombre de modules de conversion 20U, obtenue par l'intermédiaire du bus de données 18U ;
- la valeur de la première tension délivrée par le dispositif d'alimentation 12, obtenue par l'intermédiaire du bus de données 18U ;
- la valeur du premier courant délivré par le dispositif d'alimentation 12, mesurée aux bornes d'entrée 22 du module de conversion 20U ou bien, en variante, obtenue par l'intermédiaire du bus de données 18U ;
- la valeur de la tension entre les bornes d'entrée 22 du module de conversion 20U, mesurée par le module de conversion ; et
- la valeur de la puissance active délivrée par le convertisseur 32 du module de conversion 20U à la baie 14 associée.

À partir de ces données, l'unité électronique de commande 28 calcule le déphasage entre la tension entre les bornes d'entrée 22 du module de conversion 20U et le premier courant circulant entre les bornes d'entrée du module de conversion, et calcule la valeur cible de puissance apparente du module de conversion 20U, c'est-à-dire la puissance apparente que le module de conversion doit prendre pour équilibrer le fonctionnement des modules en série sur la première phase U délivrée par le dispositif d'alimentation 12 du centre de traitement de données 10.

Ensuite, l'unité électronique de commande 28 régule les paramètres suivants du module de conversion 20U :
- la tension entre les bornes d'entrée 22 du module de conversion 20U et le déphasage entre la tension entre les bornes d'entrée 22 du module de conversion 20U et le premier courant circulant entre les bornes d'entrée du module de conversion, en commandant les transistors du premier groupe de transistors 30 et au moyen de l'au moins un élément capacitif 42, pour atteindre la valeur cible de puissance apparente; et
- la puissance active délivrée par le convertisseur 32 à la baie 14 associée, en commandant les transistors des premier, deuxième et, le cas échéant, troisième groupes de transistors 34, 38, 40 du convertisseur 32.

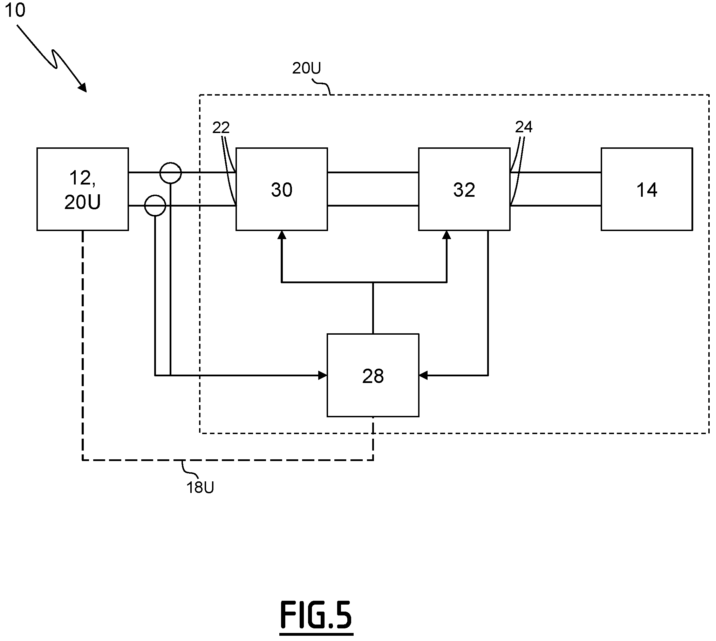

Ce fonctionnement de l'unité électronique de commande 28 d'un module de conversion 20U est illustrée schématiquement à la figure 5, sur laquelle le centre de traitement de données 10 et ledit module de conversion 20U sont représentés de manière simplifiée. Notamment, les autres modules de conversion 20U et le dispositif d'alimentation 12 sont représentés avec une seule boîte. Il est entendu que ledit module de conversion 20U est connecté en série aux autres modules de conversion et au dispositif d'alimentation 12 tel que représenté à la figure 1.

Sur la figure 5, les mesures réalisées par l'unité électronique de commande 28 sont représentées par des flèches pointant vers l'unité électronique de commande et les commandes émises par l'unité électronique de commande 28 sont représentées par des flèches partant de l'unité électronique de commande.

Chaque unité électronique de commande 28 effectue ces actions en temps réel, c'est-à-dire, en pratique, à la fréquence fondamentale du réseau alimentant le dispositif d'alimentation 12 en énergie électrique, par exemple 50 Hz.

De manière particulièrement avantageuse, la défaillance d'un module de conversion 20U entraîne la déconnexion de la baie 14 associée, mais ne perturbe pas le fonctionnement des autres modules de conversion. En effet, lorsqu'un module de conversion défaille, et devient inactif, alors les unités électroniques de commande 28 des autres modules de conversion en sont informées puisque le bus de données 18U informe tous les modules de conversion du nombre de modules de conversion actifs. Dans une telle situation, la tension entre les bornes d'entrée des modules de conversion actifs va augmenter, pour compenser la perte du module de conversion défaillant.

Le procédé de commande selon l'invention permet donc d'assurer un équilibrage permanent des tensions au niveau des bornes d'entrée 22 des modules de conversion 20U et présente l'avantage de fonctionner sans contrôle centralisé, c'est-à-dire qu'un pilotage centralisé des modules de conversion 20U n'est pas nécessaire, chaque module de conversion fonctionnant de manière autonome grâce à son unité électronique de commande 28. Ce contrôle décentralisé est particulièrement avantageux pour simplifier la gestion du centre de traitement de données 10.

Avantageusement, le centre de traitement de données est conçu de sorte que, en régime permanent, les intensités des premier, deuxième et troisième courants sont sensiblement égales entre elles, c'est-à-dire que l'ensemble des baies 14 associées respectivement aux modules de conversion 20U, aux modules de conversion 20V et aux modules de conversion 20W consomment une puissance électrique sensiblement égale. Ainsi, les première, deuxième et troisième phases U, V et W sont équilibrées.

Grâce au procédé de commande de l'invention, il est possible de connecter toutes les baies 14 en série à une source de moyenne tension et ainsi d'obtenir l'architecture du centre de traitement de données 10 de l'invention. Dans une telle architecture, la transmission de puissance depuis le dispositif d'alimentation 12 jusqu'aux baies 14 s'effectue à moyenne tension, alors que dans les architectures de centres de traitement de données, cette transmission s'effectue à basse tension. Le fait que cette transmission de puissance s'effectue à moyenne tension plutôt qu'à basse tension permet de diminuer l'intensité du courant associé, à puissance égale, ce qui autorise une diminution de la section des conducteurs électriques par l'intermédiaire desquels cette puissance est transmise.

Ainsi, par rapport à une architecture connue dans laquelle toutes les baies sont connectées en parallèle à un dispositif d'alimentation délivrant une basse tension, le coût d'installation du centre de traitement de données 10 selon l'invention est réduit d'au moins 15%, notamment grâce à la diminution de la quantité de cuivre nécessaire pour réaliser les connections électriques, puisque leur section est réduite. De plus, l'empreinte au sol du centre de traitement de données 10 est réduite d'au moins 20%, puisque les modules de conversion 20U peuvent être intégrés dans les baies 14 ou fixés aux baies et puisqu'il n'est plus nécessaire d'utiliser des convertisseurs moyenne tension - basse tension alimentant les baies 14 en parallèle.

En outre, par rapport à une installation traditionnelle, le coût d'installation, c'est-à-dire de déploiement, du centre de traitement de données 10 selon l'invention est réduit, puisque le déploiement des modules de conversion 20U, 20V, 20W en série offre plus de flexibilité et de modularité et puisque l'installation de transformateurs moyenne tension - basse tension n'est plus nécessaire.

Enfin, par rapport à une installation traditionnelle, le centre de traitement de données 10 selon l'invention est plus facilement modifiable au cours de son utilisation, car il est plus facile d'ajouter de nouvelles baies 14 à une installation existante avec une architecture en série, et son coût de maintenance est réduit, car le remplacement d'un module de conversion 20U, 20V, 20W défaillant est aisé.

Le centre de traitement de données 10 de l'invention est particulièrement adaptée aux centres de données, car dans ce type d'application, les charges électriques 16 sont relativement stables et relativement uniformément réparties entre les baies 14. En effet, dans un système avec une trop grande disparité entre les charges électriques, une puissance réactive importante peut être générée par certains modules de conversion pour compenser la faible puissance consommée par leur charge, ce qui diminue l'efficience du centre de traitement de données.

En variante non-représentée de l'invention, le dispositif d'alimentation 12 délivre une tension monophasée, au lieu d'une tension triphasée. Dans une telle variante, le fonctionnement du premier groupe de modules de conversion 20U reste inchangé et le centre de traitement de données 10 comprend uniquement ce premier groupe de modules de conversion.

En variante non-représentée de l'invention, les modules de conversion 20U, 20V et 20W ne sont pas commandés par leur unité électronique de commande 28, mais par une unité électronique de commande centralisée du centre de traitement de données 10. Une telle variante présente l'avantage de permettre une meilleure supervision de l'apparition de défauts au sein des modules de conversion et une gestion plus simples des reconfigurations des modules de conversion en cas de défaillance et/ou de remplacement de l'un d'entre eux, mais augmente la complexité de la mise en œuvre du procédé de commande de l'invention et entraîne un risque de perturbation de ce procédé, en cas de défaut lors de l'échange de données et de commandes entre l'unité électronique de commande centralisée et les modules de conversion et/ou à cause de la distance pouvant séparer l'unité électronique de contrôle centralisée des modules de conversion.

L'invention a été décrite dans un exemple où le système de distribution électrique est un centre de traitement de données, chaque module de conversion étant associé à une baie 14 comprenant une ou plusieurs charges électriques 16. Alternativement, une manière plus générale de décrire l'invention, applicable également lorsque le système de distribution électrique n'est pas un centre de traitement de données, est de considérer que chaque module de conversion est associé à une charge électrique 16, que cette charge électrique 16 soit une baie 14, un moteur électrique, un dispositif de régulation ou tout autre dispositif consommateur d'électricité. Ainsi, dans une telle description, une baie 14 et les charges électriques 16 qui y sont associées sont fonctionnellement identiques à une charge électrique 16.

Toute caractéristique décrite pour une variante dans ce qui précède peut être mise en œuvre pour les autres variantes décrites précédemment, pour autant que techniquement faisable.

## Revendications

1. Procédé de commande d'un système de distribution électrique (10), le système de distribution électrique (10) comprenant :
- un dispositif d'alimentation (12), configuré pour délivrer un premier courant, qui est un courant alternatif monophasé, associé à une première tension, qui est une tension alternative monophasée comprise entre 10 kV et 35 kV,
- une pluralité de charges électriques (16),
- une pluralité de modules de conversion (20U), les modules de conversion étant respectivement associés aux charges électriques (16),
∘ chaque module de conversion (20U) comprenant des bornes d'entrée (22) et des bornes de sortie (24),
∘ les bornes d'entrée (22) de tous les modules de conversion (20U) étant connectées en série entre elles et au dispositif d'alimentation (12), le premier courant circulant ainsi entre les bornes d'entrée (22) de tous les modules de conversion, la première tension étant ainsi appliquée à l'ensemble des modules de conversion,
∘ les bornes de sortie (24) de chaque module de conversion (20U) étant connectées à la charge électrique (16) associée au module de conversion,
∘ chaque module de conversion (20U) comprenant un convertisseur (32), connecté aux bornes de sortie (24) du module de conversion et configuré pour délivrer à la charge électrique (16) associée une tension continue comprise entre 48 V et 400 V et un courant continu, à partir de la tension alternative aux bornes d'entrée (22) du module de conversion (20U) et du courant alternatif circulant entre les bornes d'entrée du module de conversion, délivrant ainsi une puissance active alimentant la charge électrique (16) associée,
le procédé de commande comprenant, pour chaque module de conversion (20U) :
- réguler la tension continue délivrée par le module de conversion (20U) à la charge électrique (16) associé, pour la maintenir égale à une valeur constante, sur la base d'une valeur de puissance active de fonctionnement, imposée par la charge électrique, et
- maintenir une puissance apparente du module de conversion (20U) égale à une valeur cible, pour que les puissances apparentes de tous les modules de conversion (20U) soient égales entre elles, en régulant une amplitude de la tension alternative aux bornes d'entrée (22) du module de conversion et un déphasage entre la tension alternative aux bornes d'entrée du module de conversion et le courant alternatif circulant entre les bornes d'entrée du module de conversion, sur la base :
∘ de la puissance active délivrée par le module de conversion (20U) à la charge électrique (16) associée,
∘ de la tension alternative et du courant alternatif délivrés par le dispositif d'alimentation (12) à la pluralité de modules de conversion (20U), et
∘ du nombre de modules de conversion (20U).

2. Procédé de commande selon la revendication 1, dans lequel, pour chaque module de conversion (20U), maintenir la puissance apparente du module de conversion égale à une valeur cible s'effectue en augmentant la puissance réactive du module de conversion lorsque la valeur de puissance active de fonctionnement imposée par la charge électrique (16) associée diminue et en diminuant la puissance réactive du module de conversion lorsque la valeur de puissance active de fonctionnement imposée par la charge électrique associée augmente.

3. Procédé de commande selon l'une des revendications 1 et 2, dans lequel, pour chaque module de conversion (20U), l'amplitude de la tension alternative aux bornes d'entrée (22) du module de conversion est régulée pour être maintenue entre une limite basse de tension et une limite haute de tension.

4. Système de distribution électrique (10), comprenant :
- un dispositif d'alimentation (12), configuré pour délivrer un premier courant, qui est un courant alternatif monophasé, associé à une première tension, qui est une tension alternative monophasée comprise entre 10 kV et 35 kV,
- une pluralité de charge électriques (16),
- une pluralité de modules de conversion (20U), les modules de conversion étant respectivement associés aux charges électriques (16),
∘ chaque module de conversion (20U) comprenant des bornes d'entrée (22) et des bornes de sortie (24),
∘ les bornes d'entrée (22) de tous les modules de conversion (20U) étant connectées en série entre elles et au dispositif d'alimentation (12), le premier courant circulant ainsi entre les bornes d'entrée de tous les modules de conversion, la première tension étant ainsi appliquée à l'ensemble des modules de conversion,
∘ les bornes de sortie (24) de chaque module de conversion (20U) étant connectées à la charge électrique (16) associée au module de conversion,
dans lequel chaque module de conversion (20U) comprend :
- un groupe de transistors (30), connecté entre les bornes d'entrée (22) du module de conversion (20U),
- au moins un élément capacitif (42), connecté au groupe de transistors (30),
- un convertisseur (32), connecté au groupe de transistors (30) et aux bornes de sortie (24) du module de conversion (20U), et
- une unité électronique de commande (28), configurée pour commander chaque transistor du groupe de transistors (30),
dans lequel le groupe de transistors (30) de chaque module de conversion (20U) est configuré pour délivrer au convertisseur (32) du module de conversion une tension continue et un courant continu, à partir de la tension alternative aux bornes d'entrée (22) du module de conversion (20U) et du courant alternatif circulant entre les bornes d'entrée du module de conversion,
dans lequel le convertisseur (32) de chaque module de conversion (20U) est configuré pour délivrer à la charge électrique (16) associée une tension continue constante comprise entre 48 V et 400 V et un courant continu, à partir de la tension continue et du courant continu délivrés par le groupe de transistors (30) du module de conversion,
et dans lequel l'unité électronique de commande (28) de chaque module de conversion (20U) est configurée pour réguler l'amplitude de la tension alternative aux bornes d'entrée (22) du module de conversion et le déphasage entre la tension alternative aux bornes d'entrée du module de conversion et le courant alternatif circulant entre les bornes d'entrée du module de conversion, en commandant le groupe de transistors (30) du module de conversion et au moyen de l'au moins un élément capacitif (42) du module de conversion.

5. Système de distribution électrique (10) selon la revendication 4, configuré pour être commandé par le procédé de commande de l'une quelconque des revendications 1 à 3, dans lequel, pour chaque module de conversion (20U), l'unité électronique de commande (28) est configurée pour mettre en œuvre la régulation de la tension continue délivrée par le module de conversion à la charge électrique (16) associée et le maintien de la puissance apparente du module de conversion égale à la valeur cible.

6. Système de distribution électrique (10) selon l'une des revendications 4 à 5, dans lequel le groupe de transistors (30) de chaque module de conversion (20U) comprend des transistors bipolaires à grille isolée.

7. Système de distribution électrique (10) selon l'une des revendications 4 à 6, dans lequel la pluralité de modules de conversion (20U) comprend au moins dix modules de conversion (20U).

8. Système de distribution électrique (10) selon l'une des revendications 4 à 7, dans lequel chaque module de conversion (20U) comprend, en outre, un circuit de protection (26) configuré pour faire circuler le courant alternatif monophasé délivré par le dispositif d'alimentation (12) entre les bornes d'entrée (22) du module de conversion en court-circuitant le groupe de transistors (30) en cas de défaillance du module de conversion et/ou de la charge électrique (16) associée.

9. Système de distribution électrique (10) selon l'une des revendications 4 à 8, dans lequel le dispositif d'alimentation (12) est configuré pour délivrer un courant alternatif triphasé et une tension alternative comprise entre 10 kV et 35 kV par phase, le premier courant correspondant à une première phase du courant alternatif triphasé et la première tension correspondant à une première phase de la tension alternative triphasée, dans lequel la pluralité de modules de conversion (20U) forme un premier groupe de modules de conversion (20U)
dans lequel le système de distribution électrique (10) comprend, en outre, un deuxième groupe de modules de conversion (20V) et un troisième groupe de modules de conversion (20W), les modules de conversion (20V, 20W) du deuxième groupe de modules de conversion et du troisième groupe de modules de conversion étant identiques aux modules de conversion (20U) du premier groupe de modules de conversion, et étant chacun respectivement associé à une charge électrique (16),
et dans lequel :
- les modules de conversion (20U) du premier groupe de modules de conversion sont connectés en série au dispositif d'alimentation (12) de sorte que le premier courant circule entre les bornes d'entrée (22) de tous les modules de conversion (20U) du premier groupe et de sorte que la première tension est appliquée à l'ensemble des modules de conversion du premier groupe,
- les modules de conversion (20V) du deuxième groupe de modules de conversion sont connectés en série au dispositif d'alimentation (12) de sorte qu'un deuxième courant alternatif monophasé, correspondant à une deuxième phase du courant alternatif triphasé, circule entre les bornes d'entrée (22) de tous les modules de conversion (20V) du deuxième groupe et de sorte qu'une deuxième tension alternative monophasée, correspondant à une deuxième phase de la tension alternative triphasée, est appliquée à l'ensemble des modules de conversion du deuxième groupe, et
- les modules de conversion (20W) du troisième groupe de modules de conversion sont connectés en série au dispositif d'alimentation (12) de sorte qu'un troisième courant alternatif monophasé, correspondant à une troisième phase du courant alternatif triphasé, circule entre les bornes d'entrée (22) de tous les modules de conversion (20W) du troisième groupe et de sorte qu'une troisième tension alternative monophasée, correspondant à une troisième phase de la tension alternative triphasée, est appliquée à l'ensemble des modules de conversion du troisième groupe.

10. Système de distribution électrique (10) selon l'une des revendications 4 à 9, dans lequel le système de distribution électrique (10) est un centre de traitement de données comprenant une pluralité de baies (14), chaque charge électrique (16) et chaque module de conversion (20U, 20V, 20W) étant associé à une baie (14), chaque charge électrique (16) étant disposée dans la baie (14) associée, chaque module de conversion (20U, 20V, 20W) étant fixé à la baie (14) associée ou intégré dans la baie associée.
